# EUROPÄISCHE PATENTANMELDUNG

(11) **EP 0 812 534 A2**
(43) Veröffentlichungstag der Anmeldung: **17.12.1997**
(21) Anmeldenummer: 97810394.3
(22) Anmeldetag: 12.06.1997
(51) Int. Cl.: A01G 27/04

(54) **Selbstbefeuchtungsvorrichtung für Pflanzen**

(30) Priorität: 12.06.1996 CH 1477/96
(71) Anmelder: Haller, Peter, 8033 Zürich (CH)
(72) Erfinder: Haller, Peter, 8033 Zürich (CH)

(57) **Zusammenfassung**

Die Selbstbefeuchtungsvorrichtung besteht aus zwei übereinander angebrachten Gefässen (6,12). Das obere Gefäss (6) dient als Pflanzgefäss, das untere Gefäss (12) dient als Speichergefäss für Flüssigkeit. Als Saugmittel dient ein Docht (5,13), der die Flüssigkeit vom unteren ins obere Gefäss transportiert.

## Beschreibung

Die vorliegende Erfindung betrifft eine Selbstbefeuchtungsvorrichtung für Pflanzen gemäss Anspruch 1.Dieser Vorrichtung liegt die Aufgabe zugrunde, das Substrat, das die Wurzeln umgibt, konstant und gleichmässig zu befeuchten, auch im oberen Bereich. Dieses Ziel bietet seit langer Zeit immer wieder Anregung zu neuen Konstruktionen, was sich auch in vielen Patentschriften abzeichnet.

Abgesehen von der verbreiteten Hydrokultur (Luwasa), und den Glassvasen mit Einsatz(Bornheim), bei denen das Wurzelwerk teils frei im Wasser hängt, funktionieren z.B. verschiedene Systeme mit Unterdruck (P.S. CH 667 972, P.S. CH 620 569).

Zahlreiche Vorrichtungen basieren auf dem Prinzip der Saugfähigkeit von Dochten, aus synthethischem Material und somit unverrottbar, gemäss Anspruch 3.

Gemäss Anspruch 1 wird der Inhalt eines oberen Gefässes (6) nachstehend Pflanzengefäss genannt - mit der Flüssigkeit (11) aus einem darunter angebrachten Gefäss (12) - nachstehend Speichergefäss genannt - befeuchtet, behelfs mindestens eines Dochtes (5, 13), der vom tiefesten Punkt des Speichergefässes (12) bis zum oberen Rand des Pflanzgefässes (6) reicht.

Ein erfindungsgemässes Merkmal beruht auf der überraschenden Saughöhe des speziellen Dochtes (5, 13), die offenbar nie erprobt resp. nutzbar gemacht worden ist (s. u.a. Patentschriften CH 593 603; CH 563 708; CH 589 402; US Patent 4,324,070; US Patent 4,117,632; NL-Terinzageligging 750 46 15; EP-Anm. No. 95 10 86 974; DE-Offenlegungsschrift 29 18 332, etc.). Der besagte Docht (5, 13) besteht gemäss Anspruch 3 aus geflochtenen Schnüren (5) aus feinen synthetischen Fasern. Erfindungsgemäss teilt sich der Docht (13), der vom Speichergefäss (12) hochkommt, beim Eintritt ins Pflanzengefäss (6) in mindestens zwei Dochtschnüre (5) gemäss Anspruch 2 und deckt so die Innenwand des Pflanzgefässes an mehreren Stellen ab.

Solange sich noch etwas Flüssigkeit (11) im Speichergefäss (12) befindet, ist die Feuchtigkeit des ganzen Substrats (4) gewährleistet.

Die beschriebene Anordnung des Dochtes (13) resp. der Dochtschnüre (5) ist unabdingbar.

Das Pflanzengefäss (6), das das Substrat (4) mit dem Wurzelwerk beinhaltet, besteht aus festem undurchsichtigen Material (Ton, Steinzeug, Kunststoff) ist kegelförmig und hat unten eine flaschenhalsartige Öffnung, die den Durchgang für den Docht (13) bietet. Das Speichergefäss (12), in dem sich die Flüssigkeit befindet, ist ebenfalls kegelförmig und durchsichtig (Glas, Kunststoff), was unmittelbar Einblick auf den Wasserstand, gleichzeitig aber auch auf den Mechanismus der Vorrichtung gewährt (Transparenz der Funktion). Die grüne Farbe des Speichergefässes verhindert die Bildung von Algen. Ausserdem sind beim Pflanzgefäss nahe dem oberen Rand gleichmässig verteilt drei Löcher (3) angebracht und unten, nahe der Öffnung zwei gegenüberliegende Löcher (7), ebenfalls beim Speichergefäss zwei gegenüberliegende Löcher (9), nahe an dessen oberen Rand.

Als Aufhängemittel wurden gemäss Anspruch 9 drei dünne Inox-Stahllitzen (1) gewählt, die jeweils als Schlaufe durch die drei Löcher (3) des Pflanzengefässes geführt und oberhalb des Randes mit einer Presshülse oder Klemmbride (2) zusammengehalten werden. Oben laufen die drei Litzen durch einen Ring und werden wieder, hier als dreifache Schlaufe, mit einer Presshülse bzw. Klemmbride zusammengehalten.

Natürlich liesse sich auf eine Aufhänung mit einem gängigen Ketten-Set vorstellen.

Gemäss Anspruch 8 sind die beiden annähernd gleich grossen Gefässe (6, 12) mit einem M4-Stahlstab (10) verbunden, dergestalt, dass der Stab aussen durch die zwei gegenüberliegenden Löcher (9) des Speichergefässes (6) und innen entsprechend durch die zwei Löcher (7) des Pflanzengefässes (6) führt. Ausserhalb der Löcher (7,9) befindet sich je eine runde Arretierungsscheibe (8 aus Gummi oder Kunststoff, die jeweils im vorgesehenen Einstich im Stahlstab einrastet, so dass bei Schwanken oder allfälligen Stössen das Speichergefäss nicht fallen kann.

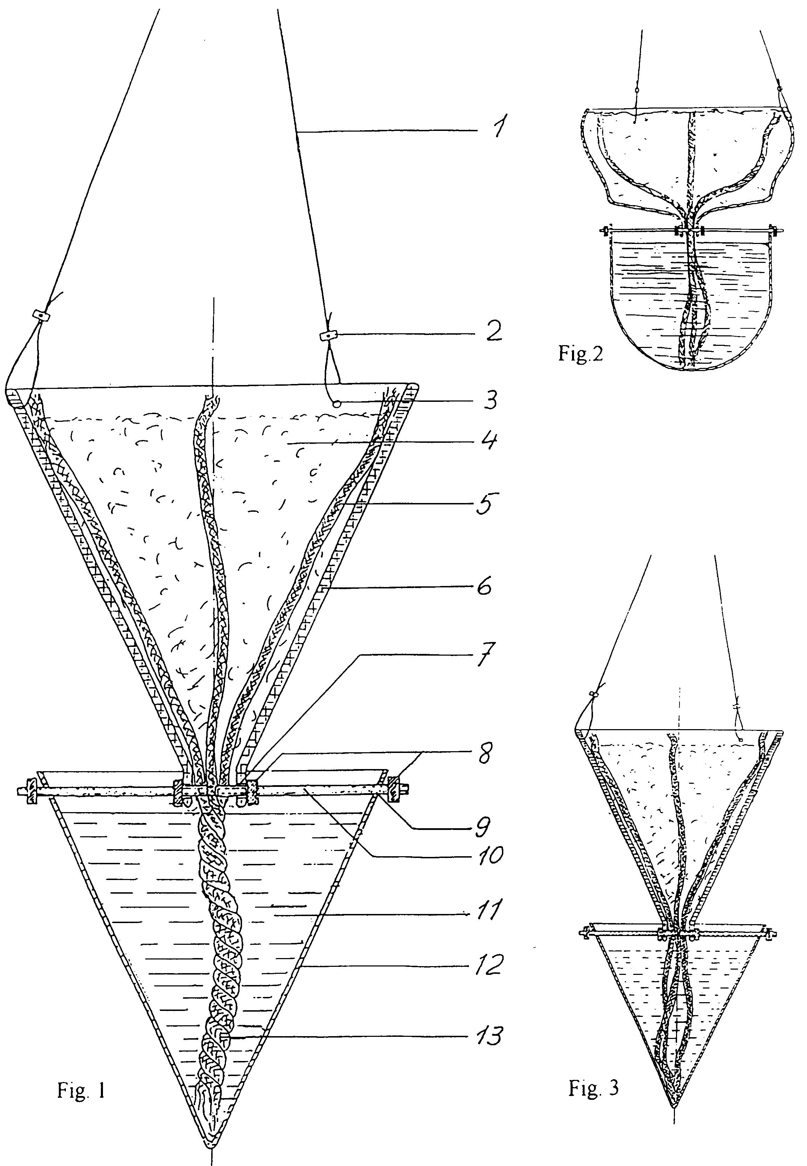

Figur 1 zeigt die Vorrichtung im Schnitt.

Figur 2 zeigt eine zweite Form, die bei gleicher Höhe etwas grösser ist.

Figur 3 zeigt die gleiche Form wie Fig.1, allerdings hängen hier die einzelnen Schnüre des Dochtes getrennt ins Speichergefäss.

Die beiden Gefässe liessen sich auch in Kunststoff ausführen.

Gemäss Anspruch 10 ist auch ein Ständer entwickelt, der es erlaubt, die Vorrichtung in Bodennähe zu plazieren, ausserdem eine entsprechende Wandhalterung.

Obwohl sich Hänge- oder Ampel-Pflanzen einer grossen Beliebtheit erfreuen, ist dennoch für Innenräume noch kein ausreichend befriedigendes Pflanzengefäss erhältlich. Bei herkömmlichen Systemen fördert der meist höhere und entsprechend wärmere Standort zusätzlich das Austrocknen des Substrats, was ein meist mühsames Wiederbefeuchten erfordert. Wegen der fehlenden Sicht auf die Substrats-Oberfläche ist zudem auch die Kontrolle der Feuchtigkeit erschwert.

Die vorliegende Vorrichtung behebt diese Schwierigkeiten mittels des beschriebenen Befeuchtungssystems, so dass die eingesetzte Pflanze mit wenig Aufwand und ohne viel Vorkenntnisse gepflegt werden kann, wobei neben der Feuchtigkeit auch die erwähnte standortbedingt erhöhte Wärme im Pflanzgefäss ("warmer Fuss") von den meisten Pflanzen geschätzt wird, gerade von den ursprünglich epiphytisch wachsenden (u.a. Rhipsalis, Platycerium, div. Orchideen).

## Patentansprüche

1. Selbstbefeuchtungvorrichtung für Pflanzen, dadurch gekennzeichnet, dass in zwei übereinander angebrachten Gefässen (6,12) ein Docht (5,13) als Saugmittel vom Boden des unteren Gefässes (12) bis an den oberen Rand des oberen Gefässes (6) verlegt ist, welcher die Innenwand des oberen Gefässes an mehreren Stellen abdeckt und die Flüssigkeit (11) aus dem unteren Gefäss ins obere Gefäss, indem sich das Substrat mit der Pflanze befindet, transportiert und so den Wurzelballen gleichmässig befeuchtet.

2. Selbstbefeuchtungsvorrichtung nach Anspruch 1, dadurch gekennzeichnet, dass der Docht (5,13) aus mindestens zwei weischnüren besteht.

3. Selbstbefeuchtungsvorrichtung nach Anspruch 2, dadurch gekennzeichnet, dass die Schnüre geflochten sind und aus synthetischem Material bestehen.

4. Selbstbefeuchtungsvorrichtung nach Anspruch 1, dadurch gekennzeichnet, dass das obere Gefäss (6,) im unteren Rereich eine Öffnung hat, deren lichte Weite kleiner ist als diejenige der oberen Öffnung.

5. Selbstbefeuchtungsvorrichtung nach Anspruch 1, dadurch gekennzeichnet, dass das obere Gefäss (6) undurchsichtig ist.

6. Selbstbefeuchtungsvorrichtung nach Anspruch 1, dadurch gekennzeichnet, dass das untere Gefäss (12) durchsichtig ist.

7. Selbstbefeuchtungsvorrichtung nach Anspruch 1, dadurch gekennzeichnet, dass die beiden Gefässe (6,12) kegelförmig sind.

8. Selbstbefeuchtungsvorrichtung nach Anspruch 1, dadurch gekennzeichnet, dass die Gefässe (6,12) beweglich, jedoch fest miteinander verbunden sind (7,8,9,10).

9. Selbstbefeuchtungsvorrichtung nach Anspruch 1, dadurch gekennzeichnet, dass sie Aufhängemittel aufweist (1,2,3).

10. Selbstbefeuchtungsvorrichtung nach Anspruch 1, dadurch gekennzeichnet, dass sie Mittel zum Aufstellen aufweist.
